# EUROPÄISCHE PATENTSCHRIFT

(11) **EP 4 245 619 B1**
(45) Veröffentlichungstag und Bekanntmachung des Hinweises auf die Patenterteilung: **24.04.2024**
(21) Anmeldenummer: 22162482.8
(22) Anmeldetag: 16.03.2022
(51) Int. Cl.: B60T 7/20, B60T 8/24, F16C 19/06, F16C 19/18, F16C 19/52

(54) **STABILISIERUNGSSYSTEM FÜR EINEN FAHRZEUGANHÄNGER UND STABILISIERUNGSVERFAHREN**
VEHICLE TRAILER STABILIZING SYSTEM AND STABILIZATION METHOD
SYSTÈME DE STABILISATION POUR UNE REMORQUE DE VÉHICULE ET PROCÉDÉ DE STABILISATION

(43) Veröffentlichungstag der Anmeldung: 20.09.2023
(73) Patentinhaber: Knott GmbH, D-83125 Eggstätt (DE)
(72) Erfinder: STRASSER, Josef, 83257 Gstadt am Chiemsee (DE)
(74) Vertreter: Flach Bauer & Partner Patentanwälte mbB

(56) Entgegenhaltungen:
- DE-A1-102017 130 329
- DE-U1-202021 102 632
- JP-B2- 5 192 397

## Beschreibung

Die Erfindung betrifft ein Stabilisierungssystem für einen Fahrzeuganhänger gemäß dem Oberbegriff des Anspruchs 1 und ein Stabilisierungsverfahren gemäß dem Oberbegriff des Anspruchs 10.

Stabilisierungssysteme dieser Art dienen bekannterweise dazu, gefährliche Schlingerbewegungen des Fahrzeuganhängers zu reduzieren, indem Schlingerbewegungen des Fahrzeuganhängers mittels eines Sensors erfasst und mindestens eine Radbremse des Fahrzeuganhängers mittels eines Bremsaktuators in geeigneter Weise zugespannt wird.

Die optimale Bremsenzuspannkraft hängt jedoch stark vom aktuellen Gewicht, d.h. vom Beladungszustand des Fahrzeuganhängers und von äußeren Umgebungsbedingungen, insbesondere vom Fahrbahnzustand, ab. Werden die Anhängerbremsen ohne Berücksichtigung dieser Parameter immer mit den gleichen, auf mittlere Parameterwerte ausgerichteten Zuspannkräften betätigt, kann es bei keiner oder geringer Beladung und glatter, rutschiger Fahrbahn zu einem Blockieren der Anhängerräder kommen. Hierdurch wird die Übertragung von Seitenkräften auf die Fahrbahn stark beeinträchtigt und es besteht die Gefahr, dass der Anhänger seitlich wegschmiert oder ausbricht.

Aus der DE 102017115445 A1 ist ein Stabilisierungssystem bekannt, bei dem ein als Elektromotor ausgebildeter Bremsaktuator, der auf eine mechanische Bremskraftübertragungseinrichtung einwirkt, in Abhängigkeit der Geschwindigkeit des Fahrzeuganhängers angesteuert wird, um eine verbesserte Anpassung des Bremseneingriffs an unterschiedliche Geschwindigkeiten zu ermöglichen. Die Geschwindigkeit kann dort mittels Polrädern erfasst werden, die an den Radnaben angeordnet sind und eine Vielzahl von Permanentmagneten umfassen, die von stationär am Chassis angeordneten Spulen oder Magnetfeldsensoren abgetastet werden. Eine derartige Konstruktion ist jedoch sowohl konstruktiv als auch von den Kosten her relativ aufwendig.

Aus der DE 202021102632 U1 ist ein Stabilisierungssystem gemäß dem Oberbegriff des Anspruchs 1 bekannt.

Aus der DE 102017130329 A1 ist ein Verfahren bekannt, bei dem ein durch ein Wälzlager hindurchgeführter Stromkreis verwendet wird, um eine Impedanz zu ermitteln und basierend auf der ermittelten Impedanz eine Aussage über die Lagerbelastung zu treffen.

Der Erfindung liegt die Aufgabe zugrunde, ein Stabilisierungssystem und ein Stabilisierungsverfahren für Fahrzeuganhänger der eingangs genannten Art zu schaffen, mit dem auf möglichst einfache und zuverlässige Weise eine Blockierungstendenz eines Anhängerrads erkannt und eine Blockierung verhindert werden kann.

Diese Aufgabe wird erfindungsgemäß durch ein Stabilisierungssystem mit den Merkmalen des Anspruchs 1 und ein Stabilisierungsverfahren mit den Merkmalen des Anspruchs 10 gelöst. Vorteilhafte Ausführungsformen der Erfindung sind in den weiteren Ansprüchen beschrieben.

Das erfindungsgemäße Stabilisierungssystem weist ein Antiblockiersystem mit einer Blockiererkennungseinrichtung zum Erkennen eines blockierenden Anhängerrads auf, wobei die Blockiererkennungseinrichtung einen über das Radlager geführten Stromkreis und eine Auswerteeinrichtung umfasst, die ausgebildet ist, einen elektrischen Kurzschluss zwischen dem äußeren Lagerelement und dem inneren Lagerelement aufgrund einer Verringerung der Schmierfilmdicke zu erfassen.

Die Erfindung benutzt die Tatsache, dass das im Radlager üblicherweise verwendete Schmiermittel im Vergleich zum äußeren und inneren Lagerelement einen wesentlich höheren elektrischen Widerstand aufweist und die Schmierfilmdicke im Radlager von der Relativgeschwindigkeit zwischen dem äußeren Lagerelement und dem inneren Lagerelement abhängt.

Bei höheren Relativgeschwindigkeiten zwischen dem äußeren und inneren Lagerelement bildet sich aufgrund der Viskosität des Schmiermittels eine kontinuierliche Schmiermittelschicht längs des Lagerumfangs aus. Eine derartige kontinuierliche Schmiermittelschicht wirkt als elektrischer Isolator oder erhöht wesentlich den elektrischen Widerstand für einen vom äußeren zum inneren Lagerelement (oder umgekehrt) geleiteten Messstrom.

Unterhalb eines bestimmten Grenzwerts der Relativgeschwindigkeit zwischen dem äußeren Lagerelement und dem inneren Lagerelement nimmt die Schmierfilmdicke zumindest in dem durch das Gewicht des Fahrzeuganhängers belasteten Bereich des Radlagers stark ab, während die Festkörperkontakte in diesem Bereich zunehmen. Kurz vor einer durch die Radbremse bewirkten Blockade des Anhängerrads und während einer derartigen Blockade kommt es aufgrund dieser Festkörperkontakte und des Fehlens eines isolierenden Schmiermittelfilms zu einem elektrischen Kurzschluss innerhalb des Radlagers, d. h. zu einer Verringerung des elektrischen Widerstandes innerhalb des Radlagers.

Dieser Kurzschluss wird erfindungsgemäß verwendet, um eine eingetretene oder drohende Blockade des Anhängerrads während eines Bremseingriffs der Anhängerbremse zu detektieren und den Bremsaktuator derart anzusteuern, dass die Radbremse zumindest soweit gelöst wird, dass sich das Anhängerrad wieder drehen kann. Dies erhöht die Spurstabilität des Anhängers und verringert die Gefahr, dass der Anhänger seitlich ausbricht oder wegschmiert.

Aufgrund der erfindungsgemäßen Blockiererkennungseinrichtung sind keine Polräder zur Erfassung von blockierenden Anhängerrädern erforderlich.

Vorzugsweise ist die Auswerteeinrichtung ausgebildet, den Ohm'schen Widerstand oder die Impedanz des Radlagers zwischen dem äußeren Lagerelement und dem inneren Lagerelement zu ermitteln. Die erfindungsgemäße Blockiererkennungseinrichtung kann somit entweder mit Gleichstrom oder mit Wechselstrom betrieben werden.

Vorzugsweise ist das äußere Lagerelement ein äußerer Lagerring und das innere Lagerelement ein innerer Lagerring eines Wälzlagers, das zwischen dem äußeren und inneren Lagerring angeordnete Wälzkörper umfasst, wobei die Auswerteeinrichtung ausgebildet ist, einen elektrischen Kurzschluss zwischen den Lagerringen und den Wälzkörpern zu erfassen. Das erfindungsgemäße Stabilisierungssystem und Stabilisierungsverfahren kann jedoch nicht nur bei Wälzlagern, sondern auch bei Gleitlagern angewendet werden.

Gemäß einer vorteilhaften Ausführungsform ist das innere Lagerelement über eine erste stationäre Stromleitung und das äußere Lagerelement über eine zweite Stromleitung mit der Auswerteeinrichtung verbunden, wobei die zweite Stromleitung einen stationären Leitungsabschnitt und einen zusammen mit der Radnabe rotierenden Leitungsabschnitt aufweist und die beiden Leitungsabschnitte mittels eines Schleifkontakts oder kontaktlos mittels induktiver oder kapazitiver Kopplung gekoppelt sind.

Vorzugsweise ist an der Radnabe eine zentrisch an der Radnabe befestigte Staubkappe vorgesehen, wobei der Schleifkontakt ein koaxial über das Achselement vorstehendes und an diesem befestigtes Schleifkontaktelement umfasst, das mit einem mittigen Bereich einer elektrisch leitenden Kontaktfläche der Staubkappe in Schleifkontakt ist. Die Kontaktierung im mittigen Bereich der Staubkappe hat den Vorteil, dass dort die niedrigste Relativgeschwindigkeit zwischen dem stationären Schleifkontaktelement und der rotierenden Staubkappe herrscht, was in Bezug auf Beanspruchung und Verschleiß der kontaktierenden Teile vorteilhaft ist.

Alternativ ist es auch möglich, dass der Schleifkontakt ein Schleifkontaktelement umfasst, das an einem Bremsteller einer Anhängerbremse vorzugsweise verschiebbar gehaltert und mit einem an der Radnabe befestigten oder ausgebildeten Kontaktring in Schleifkontakt ist. Besonders vorteilhaft ist es hierbei, wenn der Kontaktring im Bereich eines stirnseitigen Endes der Radnabe befestigt oder ausgebildet ist.

Ist zwischen dem stationären Leitungsabschnitt und dem zusammen mit der Radnabe rotierenden Leitungsabschnitt eine induktive oder kapazitive Kopplung vorgesehen, so kann diese mittels einer ersten Spule oder Metallfläche, die am Achselement oder an einem Bremsteller einer Anhängerbremse angeordnet ist, und einer zweiten Spule oder Metallfläche, die an der Radnabe oder einer mit der Radnabe verbundenen Bremstrommel angeordnet ist, erfolgen.

Vorzugsweise weist das Achselement einen axialen Hohlraum auf, durch welche die erste Stromleitung und/oder der stationäre Leitungsabschnitt der zweiten Stromleitung hindurchgeführt ist. Hierdurch können die stationären Stromleitungen geschützt und platzsparend untergebracht werden.

Beim erfindungsgemäßen Verfahren wird ein über das Radlager geführter Stromkreis mit einem Messstrom beaufschlagt. Weiterhin wird ein elektrischer Kurzschluss zwischen dem äußeren Lagerelement und dem inneren Lagerelement aufgrund einer Verringerung der Schmierfilmdicke erfasst. Beim Erfassen eines elektrischen Kurzschlusses im Radlager wird die Radbremse mittels des Bremsaktuators teilweise oder vollständig gelöst.

Beim erfindungsgemäßen Stabilisierungsverfahren treten die gleichen technischen Effekte auf, wie im Zusammenhang mit dem erfindungsgemäßen Stabilisierungssystem beschrieben.

Vorzugsweise überprüft eine Auswerteeinrichtung nach dem Lösen der Radbremse, ob sich das Anhängerrad dreht, und veranlasst im Falle des Drehens einen einen auf die Radbremse einwirkenden Bremsaktuator, die Radbremse innerhalb einer vorbestimmten Zeit, die insbesondere 0,1 bis 0,5 Sekunden beträgt, wieder zuzuspannen. Hierdurch wird ein sehr wirksam arbeitendes Antiblockiersystem für den Fahrzeuganhänger geschaffen.

Die Erfindung wird nachfolgend anhand der Zeichnungen beispielhaft näher erläutert. Es zeigen:
- Figur 1:: eine räumliche Darstellung mit Blickrichtung schräg von oben auf ein Chassis eines Fahrzeuganhängers,
- Figur 2:: eine teilweise frei geschnittene Draufsicht auf das Chassis von Figur 1, wobei ein Aufbau mit strichpunktierten Linien angedeutet ist,
- Figur 3:: die Einzelheit III von Figur 2 in vergrößertem Maßstab,
- Figur 4:: einen Schnitt durch eine Bremsnabe und ein Achselement mit schematischer Darstellung einer ersten Ausführungsform der erfindungsgemäßen Blockiererkennungseinrichtung,
- Figur 5:: die Einzelheit V von Figur 4 in vergrößertem Maßstab,
- Figur 6:: einen Schnitt durch eine Bremsnabe und ein Achselement mit schematische Darstellung einer zweiten Ausführungsform der erfindungsgemäßen Blockiererkennungseinrichtung,
- Figur 7:: die Einzelheit VII von Figur 6 in vergrößertem Maßstab,
- Figur 8:: einen Schnitt durch ein Wälzlager und eine schematisch dargestellte Auswerteeinrichtung zur Erläuterung des erfindungsgemäßen Prinzips, und
- Figur 9:: eine nicht maßstabsgetreue Prinzipdarstellung der Schmierverhältnisse in einem Wälzlager mit ausgebildetem Schmiermittelfilm.

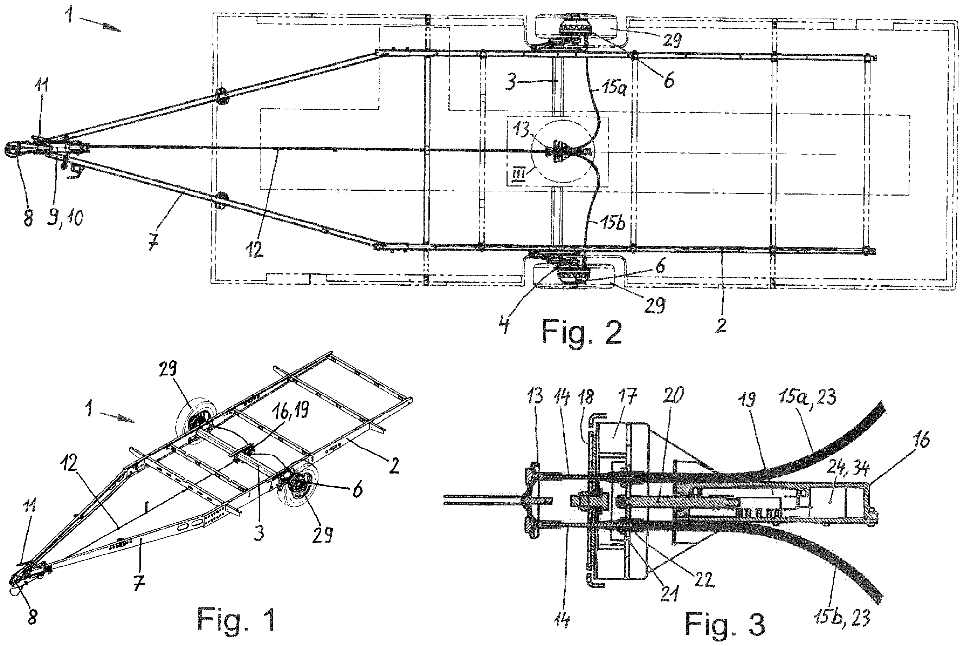

In den Figuren 1 und 2 ist ein Chassis 1 für einen auflaufgebremsten Fahrzeuganhänger, beispielsweise einen Wohnwagenanhänger, gezeigt.

Das Chassis 1 umfasst zwei seitliche Längsträger 2, an denen ein quer verlaufendes Achsrohr 3 befestigt ist. Innerhalb des Achsrohrs 3 sind ein oder zwei Schwingwellen begrenzt drehbar und insbesondere mittels Gummischnüren gelagert. Im gezeigten Ausführungsbeispiel ist die Anhängerachse somit als Torsionsfederachse, insbesondere Gummifederachse, ausgebildet. An den außenliegenden Enden der Schwingwelle(n) sind Schwinghebel 4 drehfest befestigt. An den Schwinghebeln 4 sind in bekannter Weise Achselemente 5 in der Form von Achsstummeln befestigt, die zur Lagerung von Radbremsen 6 dienen. Die Radbremsen 6 sind im dargestellten Ausführungsbeispiel als Trommelbremsen ausgebildet, an denen Anhängerräder 29 befestigt sind.

Von den Längsträgern 2 erstrecken sich Zugholme 7 zum vorderen Endbereich des Fahrzeuganhängers, wo sich eine Zugkugelkupplung 8, eine Auflaufeinrichtung 9 einer Auflaufbremsanlage 10 und ein Handbremshebel 11 einer Feststellbremse befinden.

Die von der Auflaufeinrichtung 9 und dem Handbremshebel 11 erzeugte Bremskraft wird über eine mechanische Bremskraftübertragungseinrichtung auf die Radbremsen 6 übertragen. Diese mechanische Bremskraftübertragungseinrichtung umfasst ein zentrales Bremsgestänge 12, das an seinem vorderen Ende mit einem nicht näher dargestellten Übersetzungshebel der Auflaufbremsanlage 10 und mit seinem hinteren Ende mit einer Ausgleichswaage 13 verbunden ist, die in Figur 3 näher dargestellt ist.

Die Ausgleichswaage 13 besteht zweckmäßigerweise aus einem biegesteifen Profilelement, das vom Bremsgestänge 12 mittig durchdrungen wird und von einer auf das Bremsgestänge 12 aufgeschraubten Mutter hintergriffen wird. An den beiden gegenüberliegenden Endbereichen der Ausgleichswaage 13 sind Seilzüge 14 von zwei Bowdenzügen 15a, 15b befestigt, die seitlich nach außen zu den Radbremsen 6 geführt sind. Die Seilzüge 14 sind in bekannter Weise mit den Radbremsen 6 derart verbunden, dass durch Ziehen an den Seilzügen 14 die Radbremsen 6 betätigt werden.

Zur Reduzierung von Schlingerbewegungen des Fahrzeuganhängers ist ein Anhängerstabilisierungssystem vorgesehen, das in Figur 3 näher dargestellt ist. Dieses Anhängerstabilisierungssystem umfasst eine Zentraleinheit 16, die mittels einer Befestigungskonsole 17 an einer Befestigungsplatte 18 des Achsrohrs 3 befestigt, insbesondere festgeschraubt, ist. Die Befestigungsplatte 18 erstreckt sich im gezeigten Ausführungsbeispiel vom Achsrohr 3 nach unten und ist mittig zwischen den Längsträgern 2 am Achsrohr 3 festgeschweißt.

Die Zentraleinheit 16 umfasst einen Bremsaktuator 19 in der Form eines Elektromotors, der über Getriebeelemente auf eine Zugstange 20 einwirkt, um diese im Fall von Schlingerbewegungen nach hinten, d. h. in Figur 3 nach rechts, zu ziehen. Das vordere Ende der Zugstange 20 ist mit einem verschiebbaren Seilhüllenwiderlager 21 fest verbunden, an dem die Enden 22 der Seilzughüllen 23 der Bowdenzüge 15a, 15b festgelegt sind. Die Seilzughüllen 23 erstrecken sich mit ihren Enden 22 durch Löcher des Seilhüllenwiderlagers 21 hindurch und werden dort mittels Schrauben festgelegt. Die Seilzüge 14 erstrecken sich weiter nach vorne durch Löcher in der Befestigungsplatte 18 hindurch und können hierdurch an der Ausgleichswaage 13 festgelegt werden.

Das Anhängerstabilisierungssystem umfasst weiterhin einen nicht näher dargestellten Schlingerbewegungssensor, der ebenfalls in der Zentraleinheit 16 angeordnet sein kann und im Fall von Schlingerbewegungen des Fahrzeuganhängers entsprechende Schlingerbewegungssignale erzeugt. Bei einem derartigen Schlingerbewegungssensor kann es sich beispielsweise um einen Querbeschleunigungssensor oder um einen Giersensor handeln.

Eine vorzugsweise ebenfalls in der Zentraleinheit 16 angeordnete, in Figur 3 schematisch dargestellte elektronische Steuerungseinheit 24 verarbeitet die vom Schlingerbewegungssensor erhaltenen Schlingerbewegungssignale und erzeugt daraus entsprechende Steuersignale für den Bremsaktuator 19. Der Bremsaktuator 19 betätigt dann die mechanische Bremskraftübertragungseinrichtung in Abhängigkeit der Steuersignale. Dies erfolgt dadurch, dass der Bremsaktuator 19 beim Auftreten von Schlingerbewegungen die Zugstange 20 und damit über das Seilhüllenwiderlager 21 auch die Enden 22 der Seilzughüllen 23 nach hinten zieht, wodurch die Radbremsen 6 zugespannt werden. Die hierdurch bewirkte Bremsung des Fahrzeuganhängers bewirkt eine Streckung des Gespanns und reduziert die Schlingerbewegungen des Fahrzeuganhängers.

Zur verbesserten Anpassung der vom Anhängerstabilisierungssystem im Fall von Schlingerbewegungen ausgelösten Bremskraft an die jeweiligen Fahrbedingungen kann das Anhängerstabilisierungssystem eine Geschwindigkeitsmesseinrichtung zur Messung der Geschwindigkeit des Fahrzeuganhängers aufweisen. Die von der Geschwindigkeitsmesseinrichtung erzeugten Signale können dann von der elektronischen Steuereinrichtung zusammen mit den Schlingerbewegungssignalen verarbeitet werden, um den Bremsaktuator 19 und damit die von der mechanischen Bremskraftübertragungseinrichtung auf die Radbremsen 6 übertragene Bremskraft in Abhängigkeit sowohl der Schlingerbewegungssignale als auch der gemessenen Geschwindigkeit zu steuern.

Weiterhin weist das Anhängerstabilisierungssystem ein Antiblockiersystem auf, mit dem ein durch die Betätigung des Bremsaktuators 19 verursachtes Blockieren eines Anhängerrads 29 unabhängig vom Gewicht bzw. Beladungszustand des Fahrzeuganhängers und unabhängig vom Fahrbahnzustand vermieden werden kann.

Dieses Antiblockiersystem umfasst eine Blockiererkennungseinrichtung zum Erkennen eines blockierenden Anhängerrads 29. Die Blockiererkennungseinrichtung erfasst die Blockade eines Anhängerrads 29 mithilfe eines Stromkreises, der über ein Radlager geführt ist, mit dem das Anhängerrad 29 drehbar an einem Achselement des Fahrzeuganhängers gelagert ist.

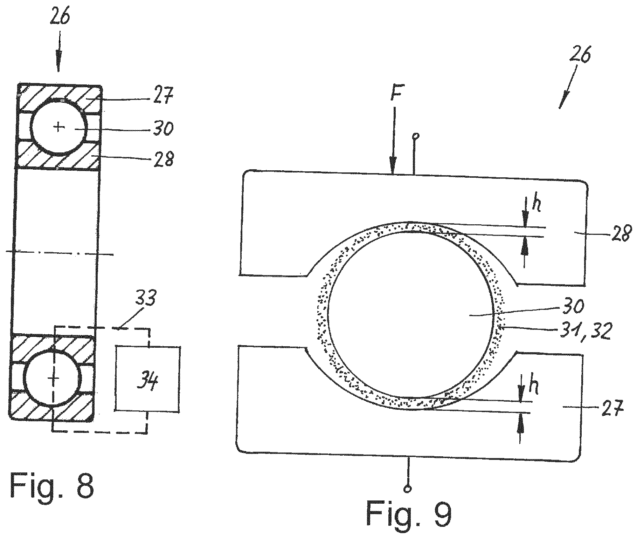

Das der erfindungsgemäßen Blockiererkennungseinrichtung zugrundeliegende Funktionsprinzip wird zunächst anhand der Figuren 8 und 9 erläutert.

Figur 8 zeigt ein Radlager 26 in der Form eines Wälzlagers, beispielsweise eines Kugellagers, mit einem äußeren Lagerelement 27 in der Form eines äußeren Lagerrings, einem inneren Lagerelement 28 in der Form eines inneren Lagerrings und einer Vielzahl von Wälzkörpern 30 in der Form von Kugeln, die längs des Umfangs des Radlagers 26 zwischen dem äußeren und inneren Lagerelement 27, 28 angeordnet sind. Die Kugeln werden üblicherweise durch einen in den Figuren 8 und 9 nicht dargestellten Kugelkäfig in gleichbleibendem Abstand zueinander gehalten.

Zur Verminderung der Reibung zwischen den Lagerringen und den Wälzkörpern 30 befindet sich üblicherweise zwischen den Lagerringen ein Schmiermittel 31 in der Form von Fett oder Öl, so dass sich um die Wälzkörper 30 herum ein Schmierfilm 32 bilden kann.

Figur 9 zeigt den unteren Teil des in Figur 8 gezeigten Radlagers 26 in vergrößerter, nicht maßstabsgerechter Darstellung in einem Betriebszustand, bei dem das äußere Lagerelement 27 mit einer ausreichend hohen Geschwindigkeit relativ zum inneren Lagerelement 28 rotiert und eine sogenannte Vollschmierung auftritt. Bedingt durch die Viskosität des Schmiermittels 31 schwimmen die Wälzkörper 30 ab einer bestimmten Geschwindigkeit auf einem geschlossenen Schmierfilm 32 auf, wodurch sich die Lagerreibung reduziert. Bei Vollschmierung bildet sich um die Wälzkörper 30 herum somit ein kontinuierlicher Schmierfilm 32, der die Reibung minimiert und eine Schmierfilmdicke h hat. Sowohl das äußere Lagerelement 27 als auch das innere Lagerelement 28 sind damit von den Wälzkörpern 30 entsprechend der Schmierfilmdicke h beabstandet.

Unterhalb einer bestimmten Grenzgeschwindigkeit nehmen dagegen die Festkörperkontakte zwischen dem äußeren Lagerelement 27 und den Wälzkörpern 30 und zwischen dem inneren Lagerelement 28 und den Wälzkörper 30 zu, wenn auf das Radlager 26 eine Gewichtskraft F einwirkt, d. h. die Schmierfilmdicke h wird zumindest partiell auf Null reduziert. Dieser Betriebszustand wird auch als Grenzschmierung bezeichnet. Sind beide Lagerelemente 27, 28 im Ruhezustand, wird somit das in Figur 9 dargestellte innere Lagerelement 28 aufgrund der Gewichtskraft F auf die Wälzkörper 30 und diese auf das äußere Lagerelement 27 gedrückt, so dass es zu einer direkten Kontaktierung dieser Teile kommt.

Die erfindungsgemäße Blockiererkennungseinrichtung verwendet das vorstehend beschriebene, geschwindigkeitsabhängige Schmierverhalten eines Radlagers 26, um die Blockade eines Anhängerrads 29 zu erfassen. Hierzu wird, wie in Figur 8 schematisch dargestellt, ein Stromkreis 33 über das Radlager 26 geführt. Ein im Stromkreis 33 fließender Messstrom wird in einer Auswerteeinrichtung 34 ausgewertet. Der Stromkreis 33 wird bei einem blockierten Anhängerrad 29 durch das Radlager 26 aufgrund der Festkörperkontakte zwischen dem äußeren Lagerelement 27 und den Wälzkörpern 30 und zwischen den Wälzkörpern 30 und dem inneren Lagerelement 28 geschlossen. Bei einem blockierten Anhängerrad 29 kommt es somit innerhalb des Radlagers 26 zu einem elektrischen Kurzschluss aufgrund des Fehlens des Schmiermittels 31 in den Bereichen der Festkörperkontakte. Dieser Kurzschluss ermöglicht einen von der Auswerteeinrichtung 34 erfassbaren maximalen Stromfluss vom äußeren Lagerelement 27 zum inneren Lagerelement 28 (oder umgekehrt) über die Wälzkörper 30.

Ab einer bestimmten Umdrehungsgeschwindigkeit der Anhängerräder 29, d. h. ab einer bestimmten Relativgeschwindigkeit zwischen dem äußeren Lagerelement 27 und inneren Lagerelement 28, steigt dagegen der elektrische Widerstand im Radlager 26 aufgrund des Aufbaus des Schmierfilms 32 an, wodurch der im Stromkreis 33 fließende Messstrom reduziert wird. Bei ausreichender Schmierfilmdicke h und entsprechend hohem elektrischen Widerstand des Schmiermittels 31 kann der Schmierfilm 32 als Isolator wirken, der einen Stromfluss durch das Radlager 26 hindurch vollkommen unterbindet. In diesem Fall stellt das Radlager 26 einen Schalter dar, der in Abhängigkeit der Schmierfilmdicke h geschlossen oder geöffnet wird.

Vorzugsweise kann die Auswerteeinrichtung 34 über die Stromstärke und die Spannung des Messstroms den Ohm'schen Widerstand oder die Impedanz des Radlagers 26 ermitteln und in Abhängigkeit des ermittelten Widerstands bestimmen, ob das Anhängerrad 29 blockiert ist. Die Blockiererkennungseinrichtung kann somit entweder mit Gleichstrom oder mit Wechselstrom betrieben werden. Bei einer Blockade eines Anhängerrads 29 steuert die Auswerteeinrichtung 34 den Bremsaktuator 19 derart an, dass die Radbremse 6 wieder soweit gelöst wird, dass sich das Anhängerrad 29 wieder dreht.

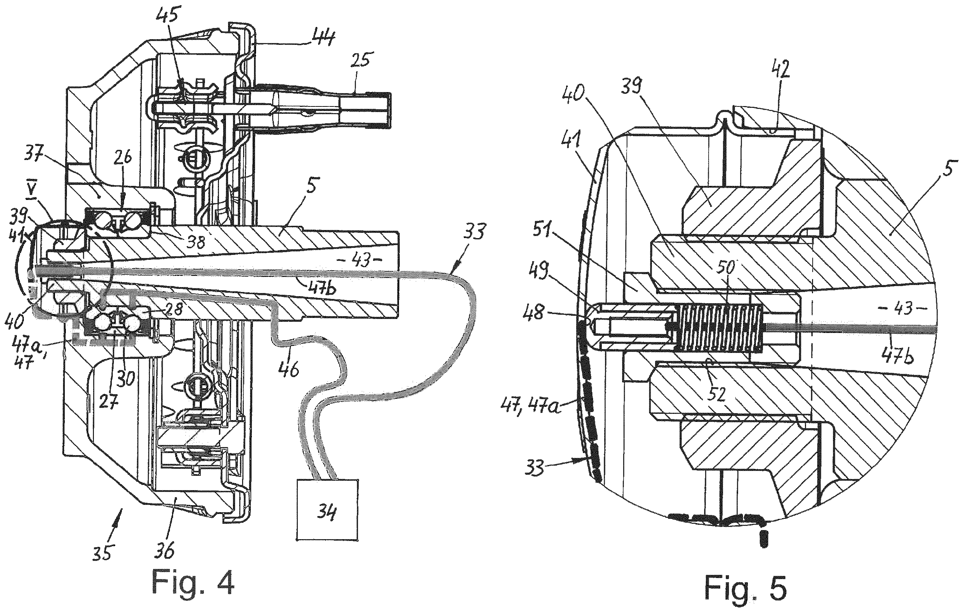

Die Figuren 4 und 5 zeigen in schematischer Weise ein erstes Ausführungsbeispiel für eine Leitungsführung des Stromkreises 33 des erfindungsgemäßen Stabilisierungssystems.

Aus Figur 4 ist eine Trommelbremse 35 mit einer Bremstrommel 36 und einer hohlzylindrischen Radnabe 37 ersichtlich. An der äußeren Stirnseite der Bremstrommel 36 kann in üblicher Weise eine nicht dargestellte Felge eines Anhängerrads 29 festgeschraubt werden.

Die Bremstrommel 36 ist über ein Radlager 26 in der Form eines Wälzlagers drehbar auf einem Achselement 5 des Fahrzeuganhängers gelagert. Das Radlager 26 ist im gezeigten Ausführungsbeispiel ein zweireihiges Schrägkugellager, mit dem die Bremstrommel 36 auch in axialer Richtung relativ zum Achselement 5 festgelegt ist. Das Radlager 26 umfasst ein äußeres Lagerelement 27 (d. h. einen äußeren Lagerring), Wälzkörper 30 in der Form von Kugeln und zwei innere Lagerelemente 28 (d. h. innere Lagerringe). Die Wälzkörper 30 werden mit Schmiermittel 31 geschmiert, wie vorstehend im Zusammenhang mit den Figuren 8 und 9 beschrieben.

Das äußere Lagerelement sitzt drehfest und axial unverschiebbar in der Radnabe 37 und dreht sich somit zusammen mit der Bremstrommel 36 und dem Anhängerrad 29 um die Längsachse des Achselements 5. Die beiden inneren Lagerelemente 28 sitzen fest auf dem Achselement 5 und drehen sich daher nicht, d. h. sie sind relativ zum Chassis 1 stationär. In axialer Richtung werden die inneren Lagerelemente 28 einerseits durch eine Durchmesserschulter 38 des Achselements 5 und andererseits durch eine zentrale Mutter 39 festgelegt, die auf einen endseitigen Gewindezapfen 40 des Achselements 5 aufgeschraubt ist. Das äußere Ende des Achselements 5 wird durch eine Staubkappe 41 abgedeckt, die in eine zentrale Öffnung 42 (Figur 5) der Bremstrommel 36 bzw. Radnabe 37 eingesteckt ist und sich zusammen mit der Bremstrommel 36 dreht.

Das Achselement 5, d. h. der Achsstummel, ist im dargestellten Ausführungsbeispiel hohl ausgeführt, so dass er einen über seine gesamte axiale Länge erstreckenden Hohlraum 43 aufweist.

Aus Figur 4 ist weiterhin ein üblicher, relativ zum Achselement 5 stationärer Bremsteller 44 ersichtlich. Der Bremsteller 44 dient in bekannter Weise zum Halten von Bremsbacken, die bei einem Bremsvorgang mittels einer Spreizeinrichtung 45 gegen die Bremstrommel 36 gedrückt werden können. Die Spreizeinrichtung 45 wird mittels der Bowdenzüge 15a, 15b betätigt, die über eine am Bremsteller 44 festgelegte Einführhülse 25 in die Trommelbremse 35 eingeführt werden.

Der Stromkreis 33 umfasst eine stationäre erste Stromleitung 46, die, ausgehend von der Auswerteeinrichtung 34, über das Achselement 5 zu den beiden inneren Lagerelementen 28 geführt ist. Über die stationäre erste Stromleitung 46 sind die inneren Lagerelemente 28 somit mit der Auswerteeinrichtung 34 elektrisch verbunden.

Das äußere Lagerelement 27 ist über eine zweite Stromleitung 47 mit der Auswerteeinrichtung 34 verbunden. Diese zweite Stromleitung 47 umfasst einen zusammen mit der Radnabe 37 rotierenden Leitungsabschnitt 47a, der vom äußeren Lagerelement 27 bis zu einer mittigen Kontaktfläche 48 der Staubkappe 41 geführt ist, und einen stationären Leitungsabschnitt 47b, der über ein Schleifkontaktelement 49 mit der Kontaktfläche 48 der Staubkappe 41 in Schleifkontakt ist, durch den axialen Hohlraum 43 des Achselements 5 zurückgeführt und mit der Auswerteeinrichtung 34 verbunden ist.

Bei einem Blockieren des Anhängerrads 29 kommt es zwischen den inneren Lagerelementen 28, den Wälzkörpern 30 und dem äußeren Lagerelement 27 zu einem elektrischen Kurzschluss und damit zu einer signifikanten Verringerung des elektrischen Widerstands des Radlagers 26, der von der Auswerteeinrichtung 34 mittels eines entsprechenden Messstroms erfasst wird.

Figur 5 zeigt die Einzelheit V von Figur 4 in vergrößerter Darstellung. Ein Teil des rotierenden Leitungsabschnitts 47a ist mit gestrichelten Linien schematisch dargestellt. Das Schleifkontaktelement 49 ist als Druckstift ausgebildet, der längsverschiebbar in einer Einschraubhülse 51 gelagert und an seinem hinteren Ende mittels einer Druckfeder 50 federnd gegen die Einschraubhülse 51 abgestützt ist. Die Druckfeder 50 drückt das vordere Ende des Schleifkontaktelements 49 permanent gegen die mittige Kontaktfläche 48 der Staubkappe 41. Die Einschraubhülse 51 ist in ein Innengewinde 52 des Gewindezapfens 40 eingeschraubt. Das Schleifkontaktelement 49 ist in geeigneter Weise mit dem stationären Leitungsabschnitt 47b der zweiten Stromleitung 47 elektrisch verbunden.

Dadurch, dass das Schleifkontaktelement 49 die Staubkappe 41 bzw. die Kontaktfläche 48 zentral, d. h. im Bereich der Drehachse der Radnabe 37 kontaktiert, werden die beiderseitigen Kontaktflächen minimal beansprucht, da dort die Relativgeschwindigkeiten minimal sind.

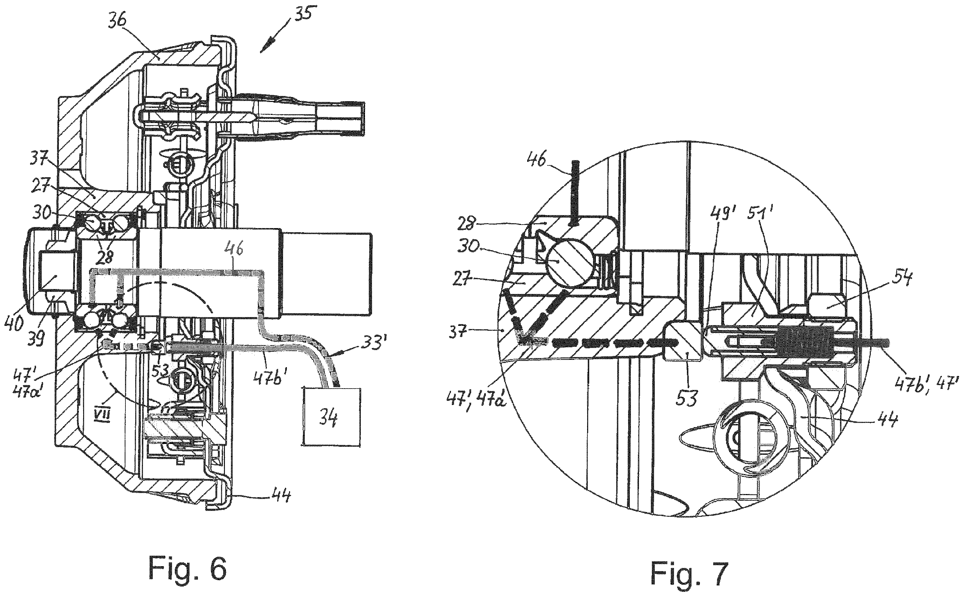

Die Figuren 6 und 7 zeigen eine zweite Ausführungsform einer erfindungsgemäßen Blockiererkennungseinrichtung mit einer geänderten Leitungsführung für einen Stromkreis 33'.

Die in Figur 6 gezeigte Trommelbremse 35 ist mit Ausnahme der Leitungsführung für den Stromkreis 33' zumindest weitgehend identisch zu der in Figur 4 dargestellten Trommelbremse 35, so dass bezüglich des grundsätzlichen Aufbaus der Trommelbremse 35 auf die dortige Beschreibung verwiesen wird.

Bei der in den Figuren 6 und 7 gezeigten Ausführungsform kann die von den beiden inneren Lagerelementen 28 zur Auswerteeinrichtung 34 geführte stationäre erste Stromleitung 46 durch einen axialen Hohlraum des Achselements 5 hindurchgeführt sein.

Weiterhin ist das äußere Lagerelement 27 über einen zusammen mit der Radnabe 37 rotierenden Leitungsabschnitt 47a' einer zweiten Stromleitung 47' mit einem Kontaktring 53 elektrisch verbunden, der an dem stirnseitigen inneren Ende der Radnabe 37 befestigt ist. Der Kontaktring 53 ist damit konzentrisch zur Radnabe 37 und drehfest an dieser angeordnet.

Mit dem Kontaktring 53 ist ein stationäres Schleifkontaktelement 49' in elektrischem Kontakt, das am Bremsteller 44 gegenüber dem Kontaktring 53 mittels einer Befestigungshülse 51' längsverschiebbar gelagert ist. Die Befestigungshülse 51' ist mittels einer Mutter 54 am Bremsteller 44 festgeschraubt. Das Schleifkontaktelement 49' und dessen Lagerung kann im Übrigen gleich oder ganz ähnlich zum Schleifkontaktelement 49 der ersten Ausführungsform ausgebildet sein.

Die zweite Stromleitung 47' umfasst ferner einen stationären Leitungsabschnitt 47b', der bei der zweiten Ausführungsform das Schleifkontaktelement 49' mit der Auswerteeinrichtung 34 elektrisch verbindet.

Die Erkennung eines blockierenden Anhängerrads 29 erfolgt bei der zweiten Ausführungsform in gleicher Weise, wie anhand der Figuren 8 und 9 beschrieben.

Im Rahmen der Erfindung sind eine Vielzahl von Variationen möglich. Anstelle von Kugellagern können auch andere Arten von Wälzlagern verwendet werden, beispielsweise Rollenlager. Weiterhin ist es auch möglich, das erfinderische Prinzip einer Blockiererkennung auch bei Gleitlagern anzuwenden. Bei Gleitlagern tritt der Kurzschluss aufgrund eines blockierenden Anhängerrads 29 direkt zwischen dem äußeren Lagerelement, beispielsweise einer Radnabe, und dem inneren Lagerelement, beispielsweise einem Achselement, auf, wenn die Schmierfilmdicke h einen bestimmten Minimalwert unterschreitet.

Vorzugsweise wird ein Schmiermittel 31 verwendet, das einen hohen elektrischen Widerstand hat. Dies bewirkt bereits bei geringen Schmierfilmdicken h einen deutlichen Anstieg des elektrischen Widerstands im Stromkreis 33 und dadurch eine schnelle Erfassung einer Radblockade bzw. eines Lösens der Radblockade.

Anstelle einer Stromübertragung mittels eines Schleifkontakts ist auch eine kontaktlose Stromübertragung mittels induktiver oder kapazitive Kopplung möglich.

## Patentansprüche

1. Stabilisierungssystem für einen Fahrzeuganhänger mit
- mindestens einem Anhängerrad (29), das mittels einer Radnabe (37) und einem Radlager (26) drehbar an einem Achselement (5) des Fahrzeuganhängers gelagert ist, wobei das Radlager (26) ein äußeres Lagerelement (27), ein inneres Lagerelement (28) und ein sich zwischen dem äußeren Lagerelement (27) und dem inneren Lagerelement (28) befindendes Schmiermittel (31) aufweist,
- einer Radbremse (6),
- einem Bremsaktuator (19) zur Betätigung der Radbremse (6),
- einer Steuerungseinheit zur Steuerung des Bremsaktuators (19) in Abhängigkeit von sensorisch erfassten Schlingerbewegungen des Fahrzeuganhängers, wobei das Stabilisierungssystem ein Antiblockiersystem mit einer Blockiererkennungseinrichtung zum Erkennen eines blockierenden Anhängerrads (29) aufweist, **dadurch gekennzeichnet, dass** die Blockiererkennungseinrichtung einen über das Radlager (26) geführten Stromkreis (33, 33') und eine Auswerteeinrichtung (34) umfasst, die ausgebildet ist, einen elektrischen Kurzschluss zwischen dem äußeren Lagerelement (27) und dem inneren Lagerelement (28) aufgrund einer Verringerung der Schmierfilmdicke (h) zu erfassen.

2. Stabilisierungssystem nach Anspruch 1, **dadurch gekennzeichnet, dass** die Auswerteeinrichtung (34) ausgebildet ist, den Ohm'schen Widerstand oder die Impedanz des Radlagers (26) zwischen dem äußeren Lagerelement (27) und dem inneren Lagerelement (28) zu ermitteln.

3. Stabilisierungssystem nach Anspruch 1 oder 2, **dadurch gekennzeichnet, dass** das äußere Lagerelement (27) ein äußerer Lagerring und das innere Lagerelement (28) ein innerer Lagerring eines Wälzlagers ist, das zwischen dem äußeren (27) und inneren Lagerring (28) angeordnete Wälzkörper (30) umfasst, wobei die Auswerteeinrichtung (34) ausgebildet ist, einen elektrischen Kurzschluss zwischen den Lagerringen und den Wälzkörpern (30) zu erfassen.

4. Stabilisierungssystem nach einem der vorhergehenden Ansprüche, **dadurch gekennzeichnet, dass** das innere Lagerelement (28) über eine stationäre erste Stromleitung (46) und das äußere Lagerelement (27) über eine zweite Stromleitung (47, 47') mit der Auswerteeinrichtung (34) verbunden ist, wobei die zweite Stromleitung (47, 47') einen stationären Leitungsabschnitt (47b, 47b') und einen zusammen mit der Radnabe (37) rotierenden Leitungsabschnitt (47a, 47a') aufweist und die beiden Leitungsabschnitte (47a, 47a'; 47b, 47b') mittels eines Schleifkontakts oder kontaktlos mittels induktiver oder kapazitiver Kopplung gekoppelt sind.

5. Stabilisierungssystem nach Anspruch 4, **dadurch gekennzeichnet, dass** an der Radnabe (37) eine zentrisch an der Radnabe (37) befestigte Staubkappe (41) vorgesehen ist und der Schleifkontakt ein koaxial über das Achselement (5) vorstehendes und an diesem befestigtes Schleifkontaktelement (49) umfasst, das mit einem mittigen Bereich einer Kontaktfläche (48) der Staubkappe (41) in Schleifkontakt ist.

6. Stabilisierungssystem nach Anspruch 4, **dadurch gekennzeichnet, dass** der Schleifkontakt ein Schleifkontaktelement (49') umfasst, das an einem Bremsteller (44) einer Radbremse (6) gehaltert und mit einem an der Radnabe (37) befestigten Kontaktring (53) in Schleifkontakt ist.

7. Stabilisierungssystem nach Anspruch 6, **dadurch gekennzeichnet, dass** der Kontaktring (53) im Bereich eines stirnseitigen Endes der Radnabe (37) befestigt oder ausgebildet ist.

8. Stabilisierungssystem nach Anspruch 4, **dadurch gekennzeichnet, dass** die induktive oder kapazitive Kopplung mittels einer ersten Spule oder Metallfläche, die am Achselement (5) oder an einem Bremsteller (44) einer Radbremse (6) angeordnet ist, und einer zweiten Spule oder Metallfläche, die an der Radnabe (37) oder einer mit der Radnabe (37) verbundenen Bremstrommel (36) angeordnet ist, erfolgt.

9. Stabilisierungssystem nach einem der Ansprüche 4 bis 8, **dadurch gekennzeichnet, dass** das Achselement (5) einen axialen Hohlraum (43) aufweist, durch welchen die stationäre erste Stromleitung (46) und/oder der stationäre Leitungsabschnitt (47b) der zweiten Stromleitung (47) hindurchgeführt ist.

10. Stabilisierungsverfahren für einen Fahrzeuganhänger,
- wobei ein Bremsaktuator (19) des Fahrzeuganhängers in Abhängigkeit von sensorisch erfassten Schlingerbewegungen des Fahrzeuganhängers angesteuert wird, mindestens eine Radbremse (6) eines Anhängerrads (29) zu betätigen, das mittels einer Radnabe (37) und einem Radlager (26) drehbar an einem Achselement (5) des Fahrzeuganhängers gelagert ist,
- wobei das Radlager (26) ein äußeres Lagerelement (27), ein inneres Lagerelement (28) und ein sich zwischen dem äußeren Lagerelement (27) und dem inneren Lagerelement (28) befindendes Schmiermittel (31) aufweist,
**gekennzeichnet durch** die folgenden Schritte:
- Beaufschlagen eines über das Radlager (26) geführten Stromkreises (33) mit einem Messstrom,
- Erfassen eines elektrischen Kurzschlusses zwischen dem äußeren Lagerelement (27) und dem inneren Lagerelement (28) aufgrund einer Verringerung der Schmierfilmdicke (h),
- teilweises oder vollständiges Lösen der Radbremse (6) mittels des Bremsaktuators (19), wenn ein elektrischer Kurzschluss erfasst wird.

11. Stabilisierungsverfahren nach Anspruch 10, **dadurch gekennzeichnet, dass** eine Auswerteeinrichtung (34) nach dem Lösen der Radbremse (6) überprüft, ob sich das Anhängerrad (29) dreht, und im Falle des Drehens einen auf die Radbremse (6) einwirkenden Bremsaktuator (19) veranlasst, die Radbremse (6) innerhalb einer vorbestimmten Zeit wieder zuzuspannen.

12. Stabilisierungsverfahren nach Anspruch 11, **dadurch gekennzeichnet, dass** die vorbestimmte Zeit 0,1 bis 0,5 Sekunden beträgt.

13. Stabilisierungsverfahren nach einem der Ansprüche 10 bis 12, **dadurch gekennzeichnet, dass** der Kurzschluss durch Bestimmung des Ohm'schen Widerstands oder der Impedanz des Radlagers (46) zwischen dem äußeren Lagerelement (27) und dem inneren Lagerelement (28) erfasst wird.

## Claims

1. Stabilising system for a vehicle trailer, comprising
- at least one trailer wheel (29), which is rotatably mounted by means of a wheel hub (37) and a wheel bearing (26) on an axle element (5) of the vehicle trailer, the wheel bearing (26) having an outer bearing element (27), an inner bearing element (28) and a lubricant (31) located between the outer bearing element (27) and the inner bearing element (28),
- a wheel brake (6),
- a brake actuator (19) for actuating the wheel brake (6),
- a control unit for controlling the brake actuator (19) as a function of sensor-recorded swaying movements of the vehicle trailer,
wherein the stabilising system has an anti-lock braking system with a locking detection device for detecting a locking trailer wheel (29),
**characterised in that** the locking detection device comprises a circuit (33, 33') routed via the wheel bearing (26) and an evaluation device (34) which is designed to record an electrical short circuit between the outer bearing element (27) and the inner bearing element (28) due to a reduction in the lubricating film thickness (h).

2. Stabilising system according to claim 1, **characterised in that** the evaluation device (34) is designed to determine the ohmic resistance or the impedance of the wheel bearing (26) between the outer bearing element (27) and the inner bearing element (28).

3. Stabilising system according to claim 1 or 2, **characterised in that** the outer bearing element (27) is an outer bearing race and the inner bearing element (28) is an inner bearing race of an antifriction bearing which comprises rolling elements (30) arranged between the outer (27) and inner bearing race (28), wherein the evaluation device (34) is designed to record an electrical short circuit between the bearing races and the rolling elements (30).

4. Stabilising system according to one of the preceding claims, **characterised in that** the inner bearing element (28) is connected to the evaluation device (34) via a stationary first power line (46) and the outer bearing element (27) is connected to the evaluation device (34) via a second power line (47, 47'), wherein the second power line (47, 47') has a stationary line section (47b, 47b') and a line section (47a, 47a') rotating together with the wheel hub (37), and the two line sections (47a, 47a'; 47b, 47b') are coupled by means of a sliding contact or contactlessly by means of inductive or capacitive coupling.

5. Stabilising system according to claim 4, **characterised in that** a dust cap (41) fastened to the centre of the wheel hub (37) is provided on the wheel hub (37) and the sliding contact comprises a sliding contact element (49) projecting coaxially beyond the axle element (5) and fastened thereto, which is in sliding contact with a central region of a contact surface (48) of the dust cap (41).

6. Stabilising system according to claim 4, **characterised in that** the sliding contact comprises a sliding contact element (49') which is supported on a brake plate (44) of a wheel brake (6) and is in sliding contact with a contact ring (53) fastened to the wheel hub (37).

7. Stabilising system according to claim 6, **characterised in that** the contact ring (53) is fastened or formed in the region of an end face of the wheel hub (37).

8. Stabilising system according to claim 4, **characterised in that** the inductive or capacitive coupling is effected by means of a first coil or metal face, which is arranged on the axle element (5) or on a brake plate (44) of a wheel brake (6), and by means of a second coil or metal face, which is arranged on the wheel hub (37) or on a brake drum (36) connected to the wheel hub (37).

9. Stabilising system according to one of claims 4 to 8, **characterised in that** the axle element (5) has an axial cavity (43) through which the stationary first power line (46) and/or the stationary line section (47b) of the second power line (47) is routed.

10. Stabilisation method for a vehicle trailer,
- wherein a brake actuator (19) of the vehicle trailer is activated as a function of sensor-recorded swaying movements of the vehicle trailer to actuate at least one wheel brake (6) of a trailer wheel (29), which is rotatably mounted on an axle element (5) of the vehicle trailer by means of a wheel hub (37) and a wheel bearing (26),
- wherein the wheel bearing (26) has an outer bearing element (27), an inner bearing element (28) and a lubricant (31) located between the outer bearing element (27) and the inner bearing element (28),
**characterised by** the following steps:
- applying a measurement current to a circuit (33) routed via the wheel bearing (26),
- recording an electrical short circuit between the outer bearing element (27) and the inner bearing element (28) due to a reduction in the lubricating film thickness (h),
- partially or fully releasing the wheel brake (6) by means of the brake actuator (19) if an electrical short circuit is recorded.

11. Stabilisation method according to claim 10, **characterised in that** after the wheel brake (6) has been released, an evaluation device (34) checks whether the trailer wheel (29) is rotating and, if it is rotating, causes a brake actuator (19) acting on the wheel brake (6) to reapply the wheel brake (6) within a predetermined time.

12. Stabilisation method according to claim 11, **characterised in that** the predetermined time is 0.1 to 0.5 seconds.

13. Stabilisation method according to one of claims 10 to 12, **characterised in that** the short circuit is recorded by ascertaining the ohmic resistance or the impedance of the wheel bearing (46) between the outer bearing element (27) and the inner bearing element (28).

## Revendications

1. Système de stabilisation de remorque de véhicule, comportant :
- au moins une roue de remorque (29) montée rotative sur un élément d'essieu (5) de la remorque au moyen d'un moyeu (37) et d'un roulement de roue (26), ledit roulement de roue (26) présentant un élément de roulement extérieur (27), un élément de roulement intérieur (28) et un lubrifiant (31) présent entre l'élément de roulement extérieur (27) et l'élément de roulement intérieur (28),
- un frein de roue (6),
- un actionneur de frein (19) pour actionner le frein de roue (6),
- une unité de commande pour commander l'actionneur de frein (19) en fonction des vacillements de la remorque détectés par un capteur ;
ledit système de stabilisation présentant un système antiblocage doté d'un dispositif de détection de blocage permettant de détecter une roue de remorque (29) en situation de blocage,
**caractérisé en ce que** le dispositif de détection de blocage comprend un circuit électrique (33, 33') passant par le roulement de roue (26) et un dispositif d'évaluation (34) conçu pour détecter un court-circuit électrique entre l'élément de roulement extérieur (27) et l'élément de roulement intérieur (28) en raison d'une réduction de l'épaisseur (h) du film de lubrifiant.

2. Système de stabilisation selon la revendication 1, **caractérisé en ce que** le dispositif d'évaluation (34) est conçu pour déterminer la résistance ohmique ou l'impédance du roulement de roue (26) entre l'élément de roulement extérieur (27) et l'élément de roulement intérieur (28).

3. Système de stabilisation selon la revendication 1 ou 2, **caractérisé en ce que** l'élément de roulement extérieur (27) est une bague de roulement extérieure et l'élément de roulement intérieur (28) est une bague de roulement intérieure d'un palier à roulement qui comprend des corps roulants (30) agencés entre la bague extérieure (27) et la bague intérieure (28), ledit dispositif d'évaluation (34) étant conçu pour détecter un court-circuit électrique entre les bagues de roulement et les corps roulants (30).

4. Système de stabilisation selon l'une des revendications précédentes, **caractérisé en ce que** l'élément de roulement intérieur (28) est relié au dispositif d'évaluation (34) par une première ligne électrique fixe (46) et l'élément de roulement extérieur (27) par une deuxième ligne électrique (47, 47'), ladite deuxième ligne électrique (47, 47') ayant un tronçon de ligne fixe (47b, 47b') et un tronçon de ligne rotatif (47a, 47a') tournant conjointement avec le moyeu (37), et les deux tronçons de ligne (47a, 47a' ; 47b, 47b') étant couplés au moyen d'un contact glissant ou bien sans contact au moyen d'un couplage inductif ou capacitif.

5. Système de stabilisation selon la revendication 4, **caractérisé en ce qu'**un capuchon anti-poussière (41) est prévu sur le moyeu (37) en étant fixé centralement sur ledit moyeu (37) et le contact glissant comprend un élément de contact glissant (49) qui fait saillie coaxialement sur l'élément d'essieu (5) en étant fixé à celui-ci et qui est en contact coulissant avec une région centrale d'une surface de contact (48) du capuchon anti-poussière (41).

6. Système de stabilisation selon la revendication 4, **caractérisé en ce que** le contact glissant comprend un élément de contact glissant (49') qui est maintenu sur un plateau de frein (44) d'un frein de roue (6) et est en contact glissant avec une bague de contact (53) fixée au moyeu (37).

7. Système de stabilisation selon la revendication 6, **caractérisé en ce que** la bague de contact (53) est fixée ou formée au niveau d'une extrémité avant du moyeu (37).

8. Système de stabilisation selon la revendication 4, **caractérisé en ce que** le couplage inductif ou capacitif est réalisé au moyen d'une première bobine ou d'une première surface métallique agencée sur l'élément d'essieu (5) ou sur un plateau de frein (44) d'un frein de roue (6), et au moyen d'une deuxième bobine ou d'une deuxième surface métallique agencée sur le moyeu (37) ou sur un tambour de frein (36) relié au moyeu (37).

9. Système de stabilisation selon l'une des revendications 4 à 8, **caractérisé en ce que** l'élément d'essieu (5) présente une cavité axiale (43) traversée par la première ligne électrique fixe (46) et/ou le tronçon de ligne fixe (47b) de la deuxième ligne électrique (47).

10. Procédé de stabilisation d'une remorque de véhicule, dans lequel
- un actionneur de frein (19) de la remorque de véhicule est commandé en fonction des vacillements de la remorque détectés par un capteur, pour actionner au moins un frein de roue (6) d'une roue de remorque (29) montée rotative sur un élément d'essieu (5) de la remorque au moyen d'un moyeu (37) et d'un roulement de roue (26), et
- le roulement de roue (26) présente un élément de roulement extérieur (27), un élément de roulement intérieur (28) et un lubrifiant (31) présent entre l'élément de roulement extérieur (27) et l'élément de roulement intérieur (28),
**caractérisé par** les étapes suivantes consistant à :
- appliquer un courant de mesure à un circuit électrique (33) passant par le roulement de roue (26),
- détecter un court-circuit électrique entre l'élément de roulement extérieur (27) et l'élément de roulement intérieur (28) en raison d'une réduction de l'épaisseur (h) du film de lubrifiant, et
- desserrer partiellement ou complètement le frein de roue (6) au moyen de l'actionneur de frein (19) lorsqu'un court-circuit électrique est détecté.

11. Procédé de stabilisation selon la revendication 10, **caractérisé en ce qu'un** dispositif d'évaluation (34) vérifie, après desserrage du frein de roue (6), si la roue de remorque (29) tourne et, si c'est le cas, un actionneur de frein (19) agissant sur le frein de roue (6) provoque le resserrage du frein de roue (6) dans un délai prédéterminé.

12. Procédé de stabilisation selon la revendication 11, **caractérisé en ce que** ledit délai prédéterminé est de 0,1 à 0,5 seconde.

13. Procédé de stabilisation selon l'une des revendications 10 à 12, **caractérisé en ce que** le court-circuit est détecté par détermination de la résistance ohmique ou de l'impédance du roulement de roue (26) entre l'élément de roulement extérieur (27) et l'élément de roulement intérieur (28).
